# EUROPEAN PATENT APPLICATION

(11) **EP 4 333 417 A1**
(43) Date of publication of application: **06.03.2024**
(21) Application number: 23163605.1
(22) Date of filing: 23.03.2023
(51) Int. Cl.: H04N 1/00, H04N 1/10, H04N 1/195

(54) **CONTROL DEVICE, EXECUTION PROGRAM, AND IMAGE CAPTURING DEVICE**

(30) Priority: 31.08.2022 JP 2022138589
(71) Applicant: FUJIFILM Business Innovation Corp., Minato-ku Tokyo (JP)
(72) Inventor: IGUCHI, Yuki, Yokohama-shi, Kanagawa (JP)
(74) Representative: Kurig, Thomas

(57) **Abstract**

A control device includes a processor configured to: perform, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and perform, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.

## Description

### BACKGROUND OF THE INVENTION

### (i) Field of the Invention

The present invention relates to a control device, an execution program, and an image capturing device.

### (ii) Description of Related Art

JP4424314B discloses a document capturing device including: a document table in which a document is placed and a specific pattern is formed on a surface; an imaging unit that images the document table; a storage unit that stores an image obtained by capturing the document table, on which no document is placed, by the imaging unit; a discontinuity determination unit that determines the presence or absence of a discontinuity in a pattern of an outer peripheral portion of a document table image captured by the imaging unit by comparing with a pattern of an outer peripheral portion of a document table image stored in the storage unit; a movement determination unit that determines that the document is being placed on the document table in a case where the discontinuity determination unit determines that the discontinuity is present in the pattern of the outer peripheral portion of the document table image, and then determines the presence or absence of the movement of the document; a projection permission unit that determines permission to project the document placed on the document table in a case where the determination is made that the discontinuity is not present in the pattern of the outer peripheral portion of the document table image, which is determined by the movement determination unit that the movement of the document is not present and which is determined by the discontinuity determination unit that the movement of the document is not present; and an output unit that outputs an image of the document table in which the projection permission unit determines to permit projection.

### SUMMARY OF THE INVENTION

As a control device, a control device may be considered in which, in a case where a document is disposed in an imaging area of an imaging portion, the imaging portion is controlled to capture an image of the document after the elapse of the predetermined postponement time.

In the control device, since the document is captured after the elapse of the predetermined postponement time, in a case where there is no additional disposition of the document in an imaging area after the document is disposed in the imaging area of the imaging portion, waiting time may occur until an image of the document is captured by the imaging portion.

An object of the exemplary embodiment of the present invention is to reduce waiting time until an image of a document is captured by an imaging portion, as compared with a case where postponement time is constantly fixed time.

According to a first aspect of the present disclosure, there is provided a control device including a processor configured to: perform, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and perform, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.

In a second aspect according to the first aspect, the impossible state may be a state in which in a case where the document is disposed in the imaging area, an area, where a document that has a gap with the document and that has the same size as the disposed document is capable of being disposed, is not present in the imaging area.

In a third aspect according to the second aspect, the impossible state may be a state in which in a case where the document that is disposed in the imaging area and the imaging area each have a rectangular shape, and a length of a short side of the document is denoted by A and a length of a long side of the imaging area is denoted by X, A ≥ X/2 is satisfied.

In a fourth aspect according to the second aspect, the impossible state may be a state in which in a case where the document that is disposed in the imaging area and the imaging area each have a rectangular shape, and a length of a short side of the document is denoted by A and a length of a long side of the imaging area is denoted by X, X/2 > A ≥ X/3 is satisfied, and a center of gravity of the document that is disposed in the imaging area is positioned within a predetermined center area of the imaging area.

In a fifth aspect according to any one of the first to fourth aspects, the possible state may be a state in which in a case where the document is disposed in the imaging area, an area, where a document that has a gap with the document and that has the same size as the disposed document is capable of being disposed, is present in the imaging area.

In a sixth aspect according to the fifth aspect, the possible state may be a state in which in a case where the document that is disposed in the imaging area and the imaging area each have a rectangular shape, and a length of a short side of the document is denoted by A and a length of a long side of the imaging area is denoted by X, X/3 > A is satisfied.

In a seventh aspect according to the fifth or sixth aspect, the possible state may be a state in which in a case where the document that is disposed in the imaging area and the imaging area each have a rectangular shape, and a length of a short side of the document is denoted by A and a length of a long side of the imaging area is denoted by X, X/2 > A ≥ X/3 is satisfied, and a center of gravity of the document that is disposed in the imaging area is positioned outside a predetermined center area of the imaging area.

In an eighth aspect according to any one of the first to seventh aspects, the first postponement time may consist of third postponement time and final postponement time, which is measured after elapse of the third postponement time, and the second postponement time may consist of fourth postponement time, which is shorter than the third postponement time, and the final postponement time, which is measured after elapse of the fourth postponement time, or consists only of the final postponement time.

In a ninth aspect according to the eighth aspect, the processor may be configured to: perform a control of providing a notification of a measurement status of the final postponement time, on a notification portion.

In a tenth aspect according to the eighth or ninth aspect, the processor may be configured to: remeasure the fourth postponement time in a case where a movement of the document disposed in the imaging area or the additional disposition of a document to the imaging area is performed before the elapse of the fourth postponement time, and capture an image of the document after elapse of the fourth postponement time and the final postponement time, in the second control.

In an eleventh aspect according to any one of the eighth to tenth aspects, the processor may be configured to: remeasure the fourth postponement time and the final postponement time in a case where a movement of the document disposed in the imaging area or the additional disposition of a document to the imaging area is performed after the elapse of the fourth postponement time and before elapse of the final postponement time, and capture an image of the document after elapse of the fourth postponement time and the final postponement time, in the second control.

In a twelfth aspect according to any one of the eighth to eleventh aspects, the processor may be configured to: remeasure the third postponement time in a case where a movement of the document disposed in the imaging area or the additional disposition of a document to the imaging area is performed before the elapse of the third postponement time, and capture an image of the document after elapse of the third postponement time and the final postponement time, in the first control.

In a thirteenth aspect according to any one of the eighth to twelfth aspects, the processor may be configured to: measure the third postponement time and the final postponement time in a case where a movement of the document disposed in the imaging area or the additional disposition of a document to the imaging area is performed after the elapse of the third postponement time and before elapse of the final postponement time, and capture an image of the document after elapse of the third postponement time and the final postponement time, in the first control.

According to a fourteenth aspect of the present disclosure, there is provided an execution program that causes a computer to execute a process comprising: performing, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and performing, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.

According to a fifteenth aspect of the present disclosure, there is provided an image capturing device including: an imaging portion that captures an image of a document disposed in an imaging area, in which in a case where the document is disposed in the imaging area and in a case where a state is in a possible state in which an additional disposition of a document to the imaging area is possible, the imaging portion captures an image of the document after elapse of predetermined first postponement time, and in a case where the document is disposed in the imaging area and in a case where the state is in an impossible state in which the additional disposition of a document to the imaging area is not possible, the imaging portion captures an image of the document after elapse of second postponement time shorter than the first postponement time.

According to the configuration of the first aspect, the waiting time until an image of the document is captured by the imaging portion is shortened, as compared with a case where postponement time is constantly fixed time.

According to the configuration of the second aspect, the waiting time until the imaging portion captures an image of the document is shortened as compared with the case where the impossible state is a state in which in a case where the document is disposed in the imaging area, an area, where all the documents that have a gap with the document and that are smaller than the disposed document can be disposed, is not present in the imaging area.

According to the configuration of the third aspect, the waiting time until the imaging portion captures an image of the document is shortened as compared with a case where the impossible state is a state in which the imaging area and the document have the same size.

According to the configuration of the fourth aspect, the waiting time until the imaging portion captures an image of the document is shortened as compared with a case where the impossible state is a state in which the imaging area and the document have the same size.

According to the configuration of the fifth aspect, the waiting time until the imaging portion captures an image of the document is shortened as compared with the case where the possible state is a state in which in a case where the document is disposed in the imaging area, an area, where all the documents that have a gap with the document and that are smaller than the disposed document can be disposed, is present in the imaging area.

According to the configuration of the sixth aspect, the waiting time until the imaging portion captures an image of the document is shortened as compared with a case where the possible state is a state in which X/2 > A is satisfied.

According to the configuration of the seventh aspect, the waiting time until the imaging portion captures an image of the document is shortened as compared with a case where the possible state is denoted by A case in which X/2 > A ≥ X/3 is satisfied regardless of the position of the center of gravity of the document disposed in the imaging area.

According to the configuration of the eighth aspect, as compared with the case where the second postponement time is configured with only the fourth postponement time, which is shorter than the third postponement time, a situation is suppressed in which capturing is performed while the position of the document G is being adjusted by moving the document, which is disposed in the imaging area MH, in the impossible state.

According to the configuration of the ninth aspect, the user can easily recognize the measurement status of the final postponement time, as compared with the case where the measurement status of the final postponement time is not notified.

According to the configuration of the tenth aspect, as compared with the case where the processor constantly measures the fourth postponement time only once, a situation is suppressed in which capturing is performed while the movement of the document, which is disposed in the imaging area, or additional disposition of the document to the imaging area is being performed.

According to the configuration of the eleventh aspect, as compared with the case where the processor constantly measures the fourth postponement time and the final postponement time only once, a situation is suppressed in which capturing is performed while the movement of the document, which is disposed in the imaging area, or additional disposition of the document to the imaging area is being performed.

According to the configuration of the twelfth aspect, as compared with the case where the processor constantly measures the third postponement time only once, a situation is suppressed in which capturing is performed while the movement of the document, which is disposed in the imaging area, or additional disposition of the document to the imaging area is being performed.

According to the configuration of the thirteenth aspect, as compared with the case where the processor remeasures the third postponement time and the final postponement time in a case where the movement of the document, which is disposed in the imaging area, or the additional disposition of the document to the imaging area is performed after the elapse of the third postponement time and before the elapse of the final postponement time, the waiting time until the imaging portion captures an image of the document is shortened.

According to the configuration of the fourteenth aspect, waiting time until an image of a document is captured by an imaging portion is shortened, as compared with a case where postponement time is constantly fixed time.

According to the configuration of the fifteenth aspect, waiting time until an image of a document is captured by an imaging portion is shortened, as compared with a case where postponement time is constantly fixed time.

### BRIEF DESCRIPTION OF THE DRAWINGS

Exemplary embodiment(s) of the present invention will be described in detail based on the following figures, wherein:
Fig. 1 is a perspective view illustrating an appearance of an image forming apparatus according to the present exemplary embodiment;
Fig. 2 is a schematic front view illustrating the image forming apparatus according to the present exemplary embodiment;
Fig. 3 is a plan view illustrating a document table according to the present exemplary embodiment;
Fig. 4 is a block diagram illustrating an example of a hardware configuration of a control device according to the present exemplary embodiment;
Fig. 5 is a block diagram illustrating an example of a functional configuration of the control device according to the present exemplary embodiment;
Fig. 6 is a plan view illustrating a state in which a document is disposed such that short sides of the document are positioned along the right-left direction, in a case where a length of the short side of the document according to the present exemplary embodiment is denoted by A, and a length of a long side of an imaging area of a camera is denoted by X, and in a case where A > X/2 is satisfied;
Fig. 7 is a plan view illustrating a state in which a document is disposed such that short sides of the document are positioned along the right-left direction, in a case where a length of the short side of the document according to the present exemplary embodiment is denoted by A, and a length of the long side of the imaging area of the camera is denoted by X, and in a case where A ≥ X/2 is satisfied;
Fig. 8 is a plan view illustrating a state in which a document is disposed such that short sides of the document are positioned along the right-left direction, in a case where a length of the short side of the document according to the present exemplary embodiment is denoted by A, and a length of the long side of the imaging area of the camera is denoted by X, and in a case where X/2 > A ≥ X/3 is satisfied and a center of gravity of the document is positioned within a center area of the imaging area;
Fig. 9 is a plan view illustrating a state in which a document is disposed such that short sides of the document are positioned along the front-rear direction, in a case where a length of the short side of the document according to the present exemplary embodiment is denoted by A, and a length of the long side of the imaging area of the camera is denoted by X, and in a case where X/2 > A ≥ X/3 is satisfied and a center of gravity of the document is positioned within a center area of the imaging area;
Fig. 10 is a plan view illustrating a state in which the center of gravity of the document is positioned within the center area of the imaging area, in a case where a length of the short side of the document according to the present exemplary embodiment is denoted by A, and a length of the long side of the imaging area of the camera is denoted by X, and in a case where X/3 > A is satisfied;
Fig. 11 is a plan view illustrating a state in which the center of gravity of the document is positioned outside the center area of the imaging area, in a case where a length of the short side of the document according to the present exemplary embodiment is denoted by A, and a length of the long side of the imaging area of the camera is denoted by X, and in a case where X/3 > A is satisfied;
Fig. 12 is a plan view illustrating a state in which the center of gravity of the document is positioned outside the center area of the imaging area, in a case where a length of the short side of the document according to the present exemplary embodiment is denoted by A, and a length of the long side of the imaging area of the camera is denoted by X, and in a case where X/2 > A ≥ X/3 is satisfied;
Fig. 13 is a front view illustrating a state in which a display portion according to the present exemplary embodiment displays a number of seconds to be counted down (specifically, 3 seconds);
Fig. 14 is a front view illustrating a state in which a display portion according to the present exemplary embodiment displays a number of seconds to be counted down (specifically, 2 seconds);
Fig. 15 is a front view illustrating a state in which a display portion according to the present exemplary embodiment displays a number of seconds to be counted down (specifically, 1 seconds); and
Fig. 16 is a flowchart illustrating an example of a flow of control processing executed by the control device according to the present exemplary embodiment.

### DETAILED DESCRIPTION OF THE INVENTION

An example of an exemplary embodiment of the present invention will be described below with reference to the drawings.

### <Image Forming Apparatus 10>

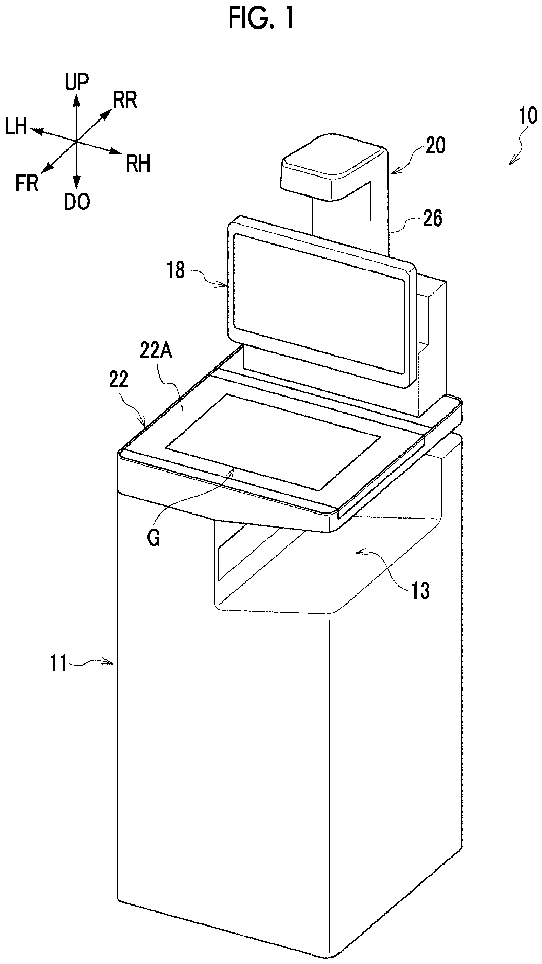

An image forming apparatus 10 according to the present exemplary embodiment will be described. Fig. 1 is a schematic view illustrating the image forming apparatus 10 according to the present exemplary embodiment.

An arrow UP illustrated in the figure indicates an up side of an apparatus, and an arrow DO indicates a down side of the apparatus. Further, an arrow LH illustrated in the figure indicates a left side of the apparatus, and an arrow RH indicates a right side of the apparatus. Further, an arrow FR illustrated in the figure indicates a front side of the apparatus, and an arrow RR indicates a rear side of the apparatus. Since these directions are directions determined for convenience of description, a configuration of the apparatus is not limited to these directions. The term "apparatus" may be omitted in each direction of the apparatus. That is, for example, the "up side of the apparatus" may be simply referred to as the "up side".

Further, in the following description, an "up-down direction" may be used to describe "both the up side and the down side" or "either one of the up side or the down side". The term "right-left direction" may be used to describe "both the right side and the left side" or "either one of the right side or the left side". The "right-left direction" can also be said to be a side, a lateral direction, and a horizontal direction. The term "front-rear direction" may be used to describe "both the front side and the rear side" or "either one of the front side or the rear side". The "front-rear direction" can also be said to be a side, a lateral direction, and a horizontal direction. Further, the up-down direction, the right-left direction, and the front-rear direction are directions intersecting each other (specifically, directions orthogonal to each other).

Further, a symbol in which "×" is described in "o" in the figure describes an arrow from the front to the back of the paper. Further, a symbol in which "●" is described in "o" in the figure describes an arrow from the back to the front of the paper. Further, a dimensional ratio of each of the parts illustrated in each of the figures in the up-down direction, the right-left direction, and the front-rear direction may differ from the actual dimensional ratio.

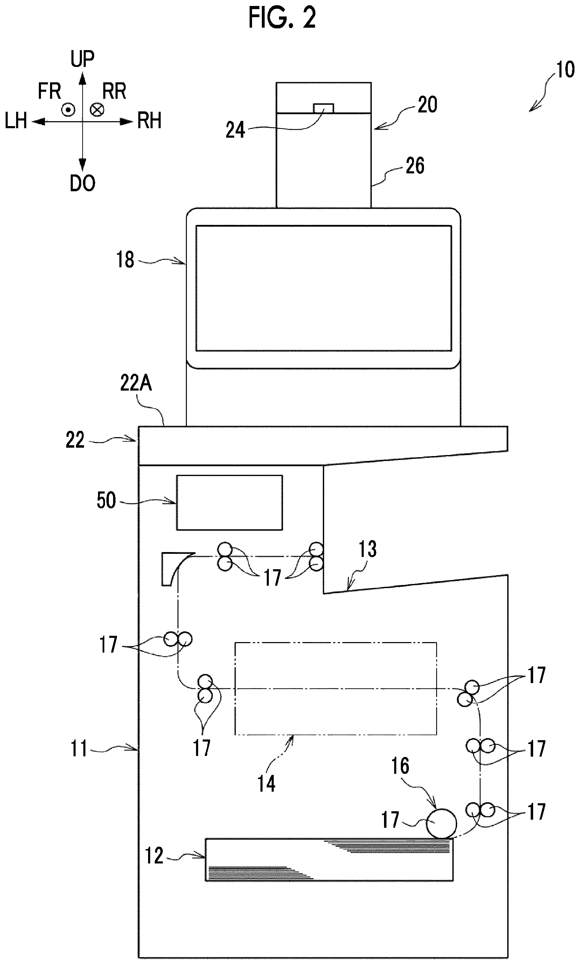

The image forming apparatus 10 is an apparatus that forms an image and includes an image forming apparatus main body 11, an image reading device 20, a medium discharging portion 13, and a display portion 18, as illustrated in Fig. 1. Further, as illustrated in Fig. 2, the image forming apparatus 10 includes a medium accommodation portion 12, an image forming portion 14, a transporting mechanism 16, and a control device 50. Hereinafter, each part of the image forming apparatus 10 will be described.

### <Image Forming Apparatus Main Body 11>

The image forming apparatus main body 11 illustrated in Figs. 1 and 2 is a part where each configuration portion of the image forming apparatus 10 is provided. As illustrated in Fig. 1, the image forming apparatus main body 11 is configured with a housing formed in a box shape (specifically, a substantially rectangular shape).

In the present exemplary embodiment, as illustrated in Fig. 2, for example, the medium accommodation portion 12, the image forming portion 14, and the transporting mechanism 16 are provided inside the image forming apparatus main body 11. The medium discharging portion 13 is provided on a right side part in an upper portion of the image forming apparatus main body 11. The image reading device 20 is positioned at an upper portion of the image forming apparatus main body 11 and is provided on an upper side with respect to the medium discharging portion 13.

### <Medium Accommodation Portion 12>

As illustrated in Fig. 2, the medium accommodation portion 12 is a part where a recording medium P is accommodated in the image forming apparatus 10. The recording medium P, which is accommodated in the medium accommodation portion 12, is supplied to the image forming portion 14. As the recording medium P, for example, paper is used.

### <Medium Discharging Portion 13>

The medium discharging portion 13 illustrated in Fig. 2 is a part in which the recording medium P is discharged, in the image forming apparatus 10. The recording medium P, on which an image is formed by the image forming portion 14, is discharged to the medium discharging portion 13.

### <Image Forming Portion 14>

The image forming portion 14 illustrated in Fig. 2 has a function of forming an image on the recording medium P sent out from the medium accommodation portion 12. As the image forming portion 14, for example, an electrophotographic type image forming portion, which forms an image on the recording medium P by using toner, is used.

In the electrophotographic type image forming portion, for example, each process of charging, exposure, development, transfer, and fixing is performed to form an image on the recording medium P. As the electrophotographic type image forming portion, each process of charging, exposure, development, and transfer may be performed to form an image on a transfer body, and an image may be formed on the recording medium P by transferring the image from the transfer body to the recording medium P and then fixing the image on the recording medium P.

The example of the image forming portion is not limited to the electrophotographic type image forming portion described above, and may be, for example, an inkjet type image forming portion, and various image forming portions can be used. In the ink jet type image forming portion, for example, ink droplets are ejected from an ejection portion to the recording medium P to form an image on the recording medium P.

### <Transporting Mechanism 16>

The transporting mechanism 16 illustrated in Fig. 2 is a mechanism that transports the recording medium P. As an example, the transporting mechanism 16 transports the recording medium P from the medium accommodation portion 12 to the image forming portion 14 by using a transporting member 17 such as a transporting roll. Further, the transporting mechanism 16 transports the recording medium P from the image forming portion 14 to the medium discharging portion 13. The transporting member 17 may be a transporting belt, transporting drum, and the like and may be any member as long as the transporting member can transport the recording medium P by applying a transporting force to the recording medium P.

### <Display Portion 18>

The display portion 18 is an example of a notification portion, and notifies a user of presentation information by displaying the presentation information to be presented to the user. The display portion 18 is configured with, for example, a liquid crystal display, an organic electro luminescence (EL) display, or the like.

In the present exemplary embodiment, the display portion 18 is disposed on a rear side with respect to a document table 22 in a state in which a display screen faces a front side. Therefore, for example, the display portion 18 is visually recognized by the user positioned on a front side with respect to the image forming apparatus main body 11.

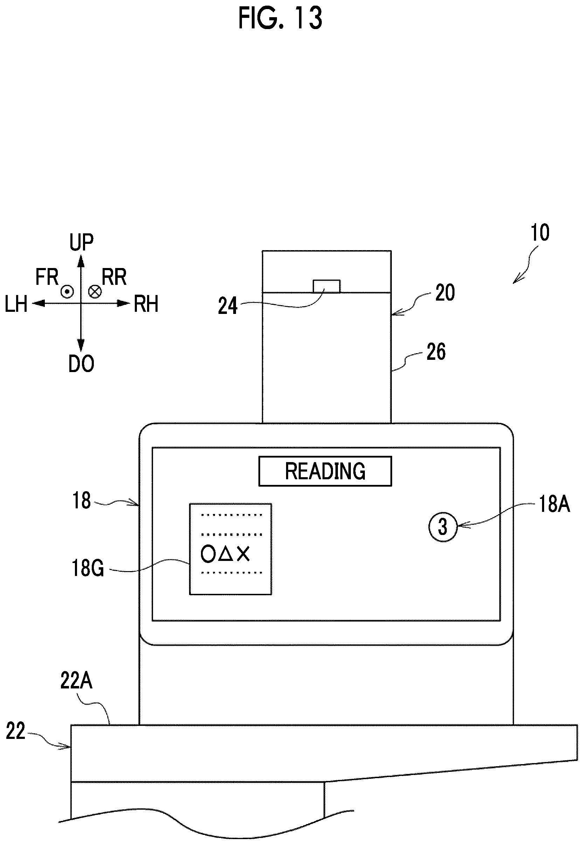

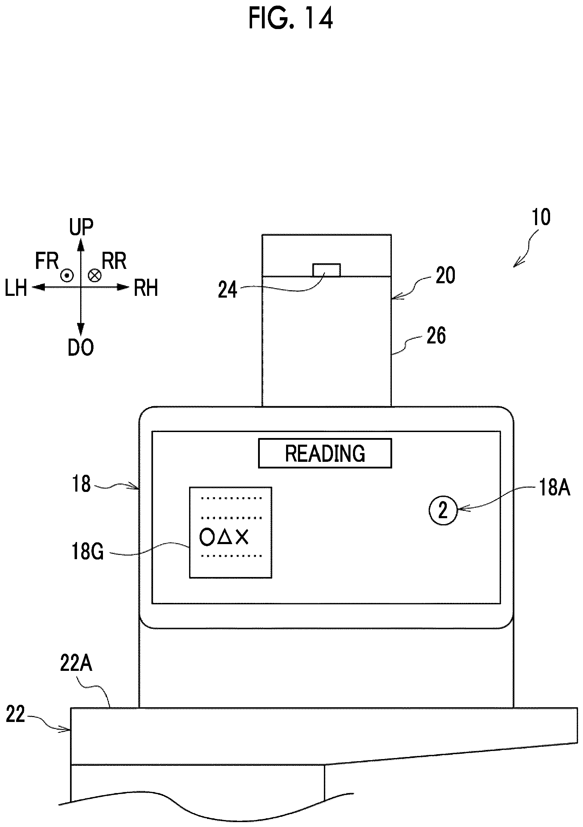

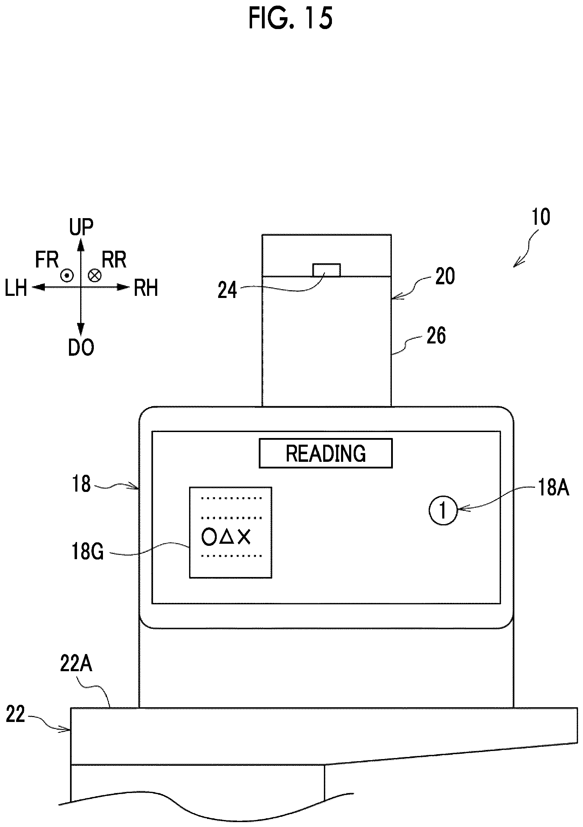

Further, the display portion 18 is capable of displaying an image of a document G captured by a camera 24 (see Figs. 13 to 15). In the present exemplary embodiment, the display portion 18 displays an image of a motion image captured by the camera 24. Further, as will be described later, the display portion 18 performs a countdown display of displaying a measurement status of the final postponement time measured by a measurement portion 66 (see Figs. 13 to 15).

The display portion 18 may include an input portion in which an instruction by the user is input. In this case, the input portion is configured with, for example, a touch panel of a resistance film type, a capacitance type, or the like, and an instruction by the user is input through a contact operation by the user.

### <Image Reading Device 20>

The image reading device 20 is an example of an image capturing device and is a device that reads an image of the document. Specifically, the image reading device 20 includes a document table 22 and a camera 24, as illustrated in Fig. 2.

### <Document Table 22>

The document table 22 is a configuration portion on which a document G, on which an image is captured by the camera 24, is placed (see Fig. 1). In the document table 22, the document G is placed on an upper surface 22A. Therefore, the upper surface 22A of the document table 22 is a placing surface on which the document G is placed.

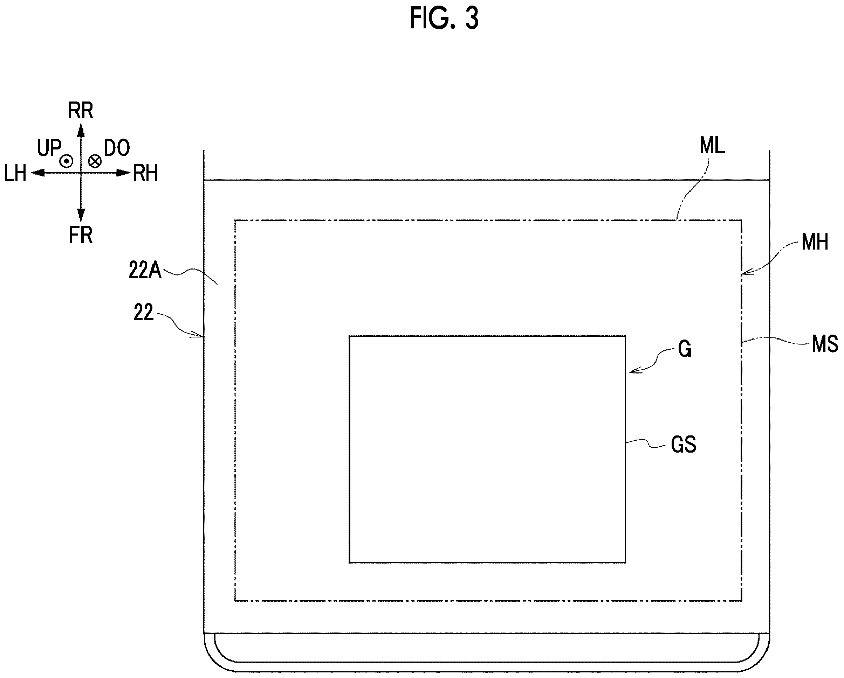

The upper surface 22A of the document table 22 has a substantially rectangular shape that is long in the right-left direction, and a rectangular-shaped document G is placed on the upper surface 22A. The area of the upper surface 22A of the document table 22 is larger than an imaging area MH (see Fig. 3) of the camera 24.

### <Camera 24>

The camera 24 is an example of an imaging portion and is a camera capable of capturing the document G placed on the document table 22. The camera 24 is disposed on an upper side with respect to the document table 22 and faces a lower side (that is, the document table 22).

As illustrated in Fig. 3, the camera 24 includes a predetermined imaging area MH (hereinafter, an "imaging area MH of the camera 24" may be simply referred to as an "imaging area MH"). The imaging area MH has a rectangular shape that is long in the right-left direction, and as an example, the imaging area MH is set to 357 mm in the front-rear direction and set to 480 mm in the right-left direction.

The camera 24 is capable of capturing an image of the document G disposed in the imaging area MH on the upper surface 22A of the document table 22. Specifically, the camera 24 is capable of performing a motion image capturing in which the document G is captured as a motion image and a static image capturing in which the document G is captured as a static image.

In the present exemplary embodiment, the camera 24 detects the document G disposed in the imaging area MH by performing the motion image capturing. That is, in the present exemplary embodiment, a detection can be made that the document G is disposed in the imaging area MH by performing the motion image capturing of the camera 24. As described above, in the present exemplary embodiment, the camera 24 functions as a detection device that detects the document G disposed in the imaging area MH.

Further, in the present exemplary embodiment, as will be described later, in a case where the control device 50 detects that the document G is disposed in the imaging area MH, the camera 24 captures an image of the document G, which is disposed in the imaging area MH, as a static image after the elapse of the predetermined postponement time, thereby the image is read.

Information related to an image obtained by performing the motion image capturing by the camera 24 (hereinafter referred to as motion image information) and information related to an image obtained by performing the static image capturing of the camera 24 (hereinafter referred to as static image information) are transmitted from the camera 24 to the control device 50. The motion image information and the static image information include information related to an image formed on the document G.

As the camera 24, for example, a digital camera having an optical system such as a lens and an imaging element that converts photosensitive light into an electric signal is used. Examples of the imaging element include a charge coupled device (CCD), a complementary metal oxide semiconductor (CMOS), and the like. An optical axis of the camera 24 is, for example, along the up-down direction when viewed from the front side.

In the present exemplary embodiment, the camera 24 is supported by a supporting portion 26 extending upward from the image forming apparatus main body 11 on the rear side with respect to the display portion 18.

In the present exemplary embodiment, the camera 24 functions as a detection device that detects the document G disposed in the imaging area MH, but the present exemplary embodiment is not limited thereto. For example, the document G, which is disposed in the imaging area MH, may be detected by a detection device provided separately from the camera 24. Examples of the detection device include a camera dedicated to detection different from the camera 24, a sensor such as a transmission type or a reflection type optical sensor, and the like.

### <Control Device 50>

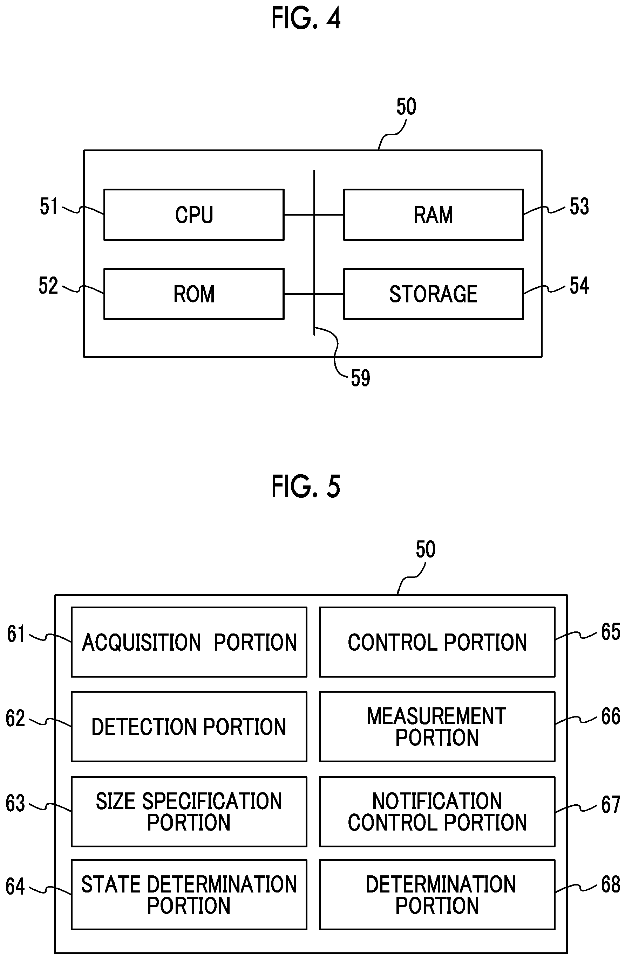

Fig. 4 is a block diagram illustrating an example of a hardware configuration of the control device 50 according to the present exemplary embodiment.

The control device 50 includes a function as a computer and includes a central processing unit (CPU) 51, a read only memory (ROM) 52, a random access memory (RAM) 53, and a storage 54, as illustrated in Fig. 4.

Each of the CPU 51, the ROM 52, the RAM 53, and the storage 54 is connected to each other by a bus 59. The CPU 51 manages and controls the entire control device 50. The ROM 52 stores various programs, which includes a control program used in the present exemplary embodiment, various data, and the like. The RAM 53 is a memory used as a work area in a case where the various programs are executed. The CPU 51 performs various processing by loading the program stored in the ROM 52 into the RAM 53 and executing the program. The control program is an example of an execution program.

As an example, the storage 54 is configured with a hard disk drive (HDD), a solid state drive (SSD), a flash memory, or the like, and stores various programs, various data, and the like. The control program may be stored in the storage 54.

In the control device 50, the CPU 51 implements various functions of controlling each portion including the image reading device 20 of the image forming apparatus 10 by executing the control program. Hereinafter, a functional configuration, which is implemented by cooperation between the CPU 51 as a hardware resource and the control program as a software resource will be described. Fig. 5 is a block diagram illustrating an example of a functional configuration of the control device 50 according to the present exemplary embodiment.

As an example, as illustrated in Fig. 5, the control device 50 includes an acquisition portion 61, a detection portion 62, a size specification portion 63, a state determination portion 64, a control portion 65, a measurement portion 66, a notification control portion 67, and a determination portion 68.

The acquisition portion 61 acquires the motion image information obtained by performing the motion image capturing of the camera 24, from the camera 24. Further, the acquisition portion 61 acquires the static image information obtained by performing the static image capturing of the camera 24 from the camera 24.

The detection portion 62 detects that the document G is disposed in the imaging area MH based on the motion image information acquired by the acquisition portion 61. Specifically, as an example, the detection portion 62 detects that the document G is disposed in the imaging area MH based on whether or not four vertices indicating the rectangular-shaped document G can be extracted from the motion image information. That is, in a case where the four vertices indicating the rectangular-shaped document G can be extracted from the motion image information, the detection portion 62 detects the disposition of the document G in the imaging area MH assuming that the document G is disposed in the imaging area MH.

The size specification portion 63 specifies the size of the document G disposed in the imaging area MH from the motion image information. Specifically, vertex information, which indicates the coordinate positions of four vertices of the rectangular-shaped document G, is extracted from the motion image information, and the length in the front-rear direction and the length in the right-left direction of the document G are obtained from the vertex information. Further, the size specification portion 63 specifies a shorter length, among the obtained lengths in the front-rear direction and the length in the right-left direction, as a length of a short side GS (see Fig. 3) of the document G. The size specification portion 63 may use the information on the vertices extracted by the detection portion 62.

In a case where the document G is disposed in the imaging area MH of the camera 24 (specifically, in a case where the detection portion 62 detects that the document G is disposed in the imaging area MH), the state determination portion 64 determines whether or not a state is in a state in which an additional disposition of the document G in the imaging area MH is possible (hereinafter referred to as a possible state).

In other words, in a case where the document G is disposed in the imaging area MH of the camera 24, the state determination portion 64 determines whether the state is in the possible state or a state in which the additional disposition of the document G in the imaging area MH is not possible (hereinafter referred to as an impossible state).

Specifically, the impossible state is a state in which in a case where the document G is disposed in the imaging area MH of the camera 24, an area, where a document G that has a gap with the document G and that has the same size as the disposed document G can be disposed, is not present in the imaging area MH.

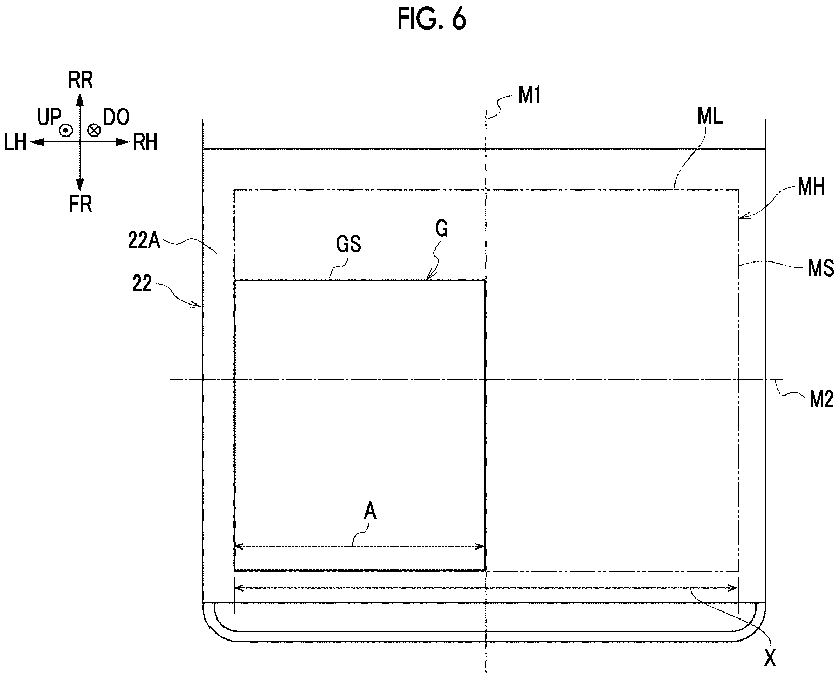

More specifically, the impossible state is a state in which A ≥ X/2 is satisfied in a case where the length of the short side GS of the document G, which is disposed in the imaging area MH, is denoted by A (see Fig. 6) and the length of the long side ML of the imaging area MH is denoted by X (see Fig. 6).

In a case where A ≥ X/2 is satisfied, and in a case where the document G is disposed such that the short sides GS of the document G are positioned along the right-left direction (that is, the long side ML of the imaging area MH), as illustrated in Fig. 6, an area, where a document G that has a gap with the document G and that has the same size as the disposed document G can be disposed, is not present in the imaging area MH.

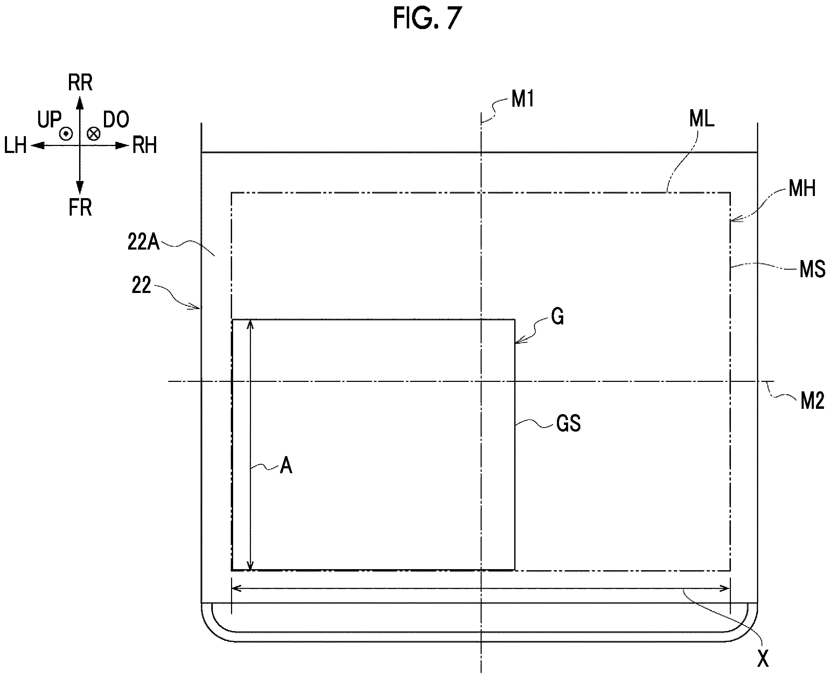

Further, in a case where A ≥ X/2 is satisfied, and even in a case where the document G is disposed such that the short sides GS of the document G is positioned along the front-rear direction (that is, the short side MS of the imaging area MH), as illustrated in Fig. 7, an area, where a document G that has a gap with the document G and that has the same size as the disposed document G can be disposed, is not present in the imaging area MH. The document G in which A ≥ X/2 is satisfied includes a document G having a B4 size (257 × 364 mm), an atypical size exceeding an A4 size (for example, 250 × 310 mm), and the like.

In Figs. 6 to 8, a center line passing through a center of the imaging area MH in the right-left direction is indicated by a one-dot chain line M1, and a central line passing through a center of the imaging area MH in the front-rear direction is indicated by a one-dot chain line M2.

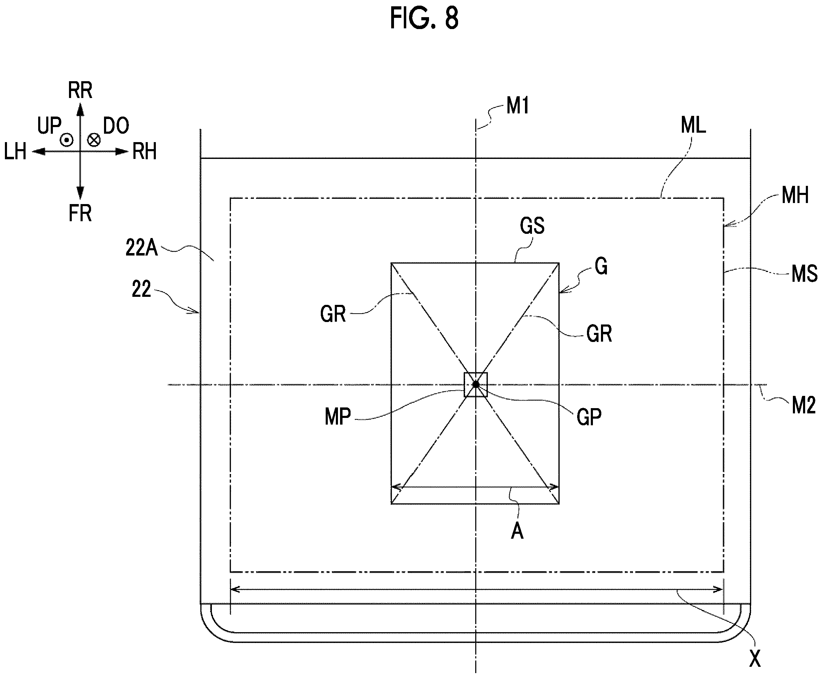

Further, the impossible state is a state in which X/2 > A ≥ X/3 is satisfied and a center of gravity GP (see Fig. 8) of the document G, which is disposed in the imaging area MH of the camera 24, is positioned within a predetermined center area MP (see Fig. 8) of the imaging area MH.

As illustrated in Fig. 8, the center of gravity GP of the document G is an intersection of a diagonal lines GR of the rectangular-shaped document G. The predetermined center area MP is an area including an intersection between the center line M1 and the central line M2, for example, is an area where a range of 1% of the dimension in the right-left direction in the imaging area MH is set on each of a left side and a right side from the intersection, and is an area where a range of 1% of the dimension in the front-rear direction in the imaging area MH is set on each of a front side and a rear side from the intersection.

In a case where X/2 > A ≥ X/3 is satisfied and the center of gravity GP (see Fig. 8) of the document G, which is disposed in the imaging area MH of the camera 24, is positioned within the predetermined center area MP (see Fig. 8) of the imaging area MH, and in a case where the document G is disposed such that the short sides GS of the document G are positioned along the right-left direction (that is, the long side ML of the imaging area MH), as illustrated in Fig. 8, an area, where a document G that has a gap with the document G and that has the same size as the disposed document G can be disposed, is not present in the imaging area MH.

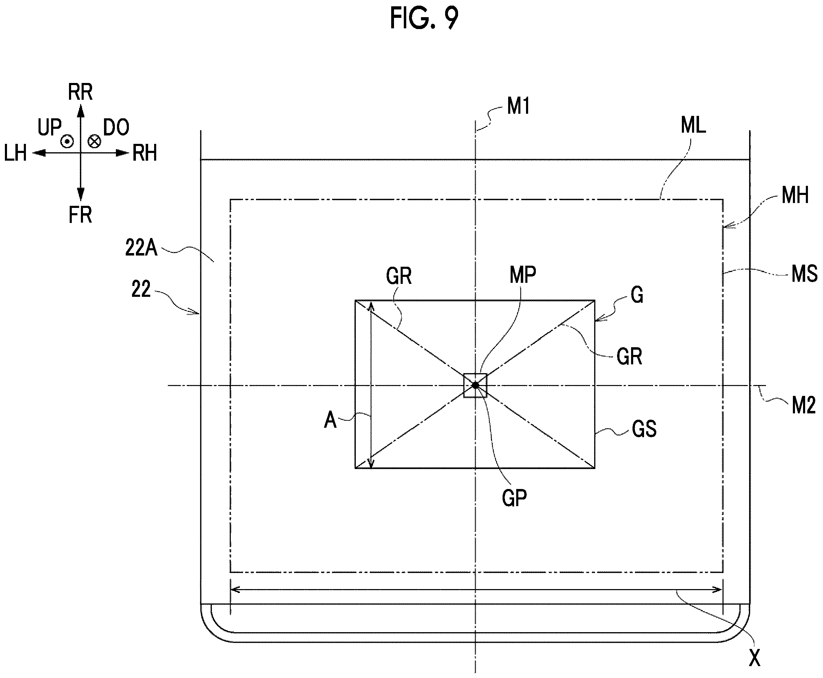

Further, in a case where X/2 > A ≥ X/3 is satisfied and the center of gravity GP (see Fig. 8) of the document G, which is disposed in the imaging area MH of the camera 24, is positioned within the predetermined center area MP (see Fig. 8) of the imaging area MH, as illustrated in Fig. 9, an area, where a document G that has a gap with the document G and that has the same size as the document G can be disposed, is not present in the imaging area MH even in a case where the document G is disposed such that the short sides GS of the document G are positioned along the front-rear direction (that is, the short side MS of the imaging area MH). The document G in which X/2 > A ≥ X/3 is satisfied includes, for example, a document G having an A4 size (210 × 297 mm), a B5 size (182 × 257 mm), and the like.

As described above, the impossible state is not a state in which the additional disposition of the document G in the imaging area MH is physically impossible but is a state in which an estimation is made that the additional disposition of the document G in the imaging area MH does not occur.

Specifically, the possible state is a state in which in a case where the document G is disposed in the imaging area MH, an area, where a document G that has a gap with the document G and that has the same size as the disposed document G can be disposed, is present in the imaging area MH. More specifically, the possible state is a state in which X/3 > A is satisfied.

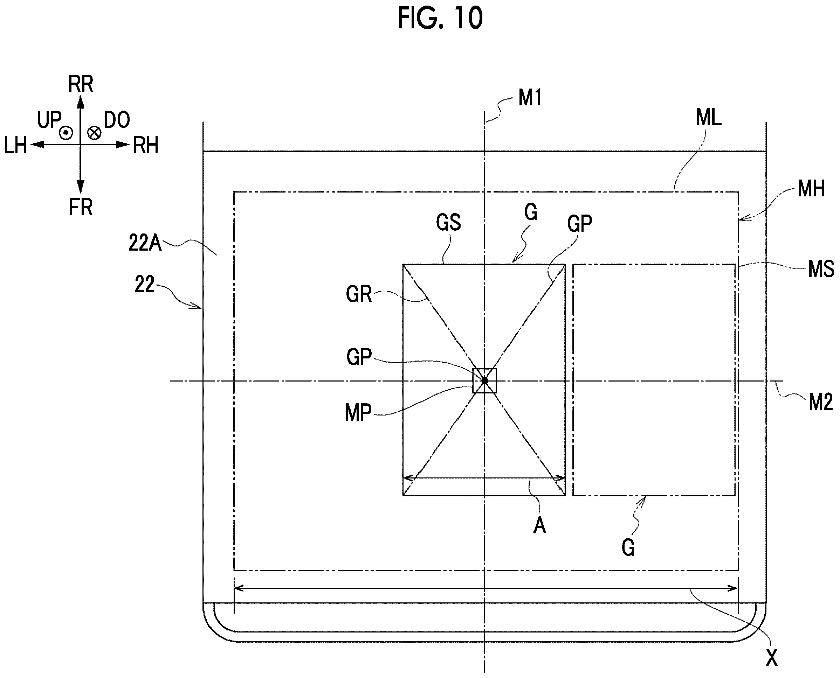

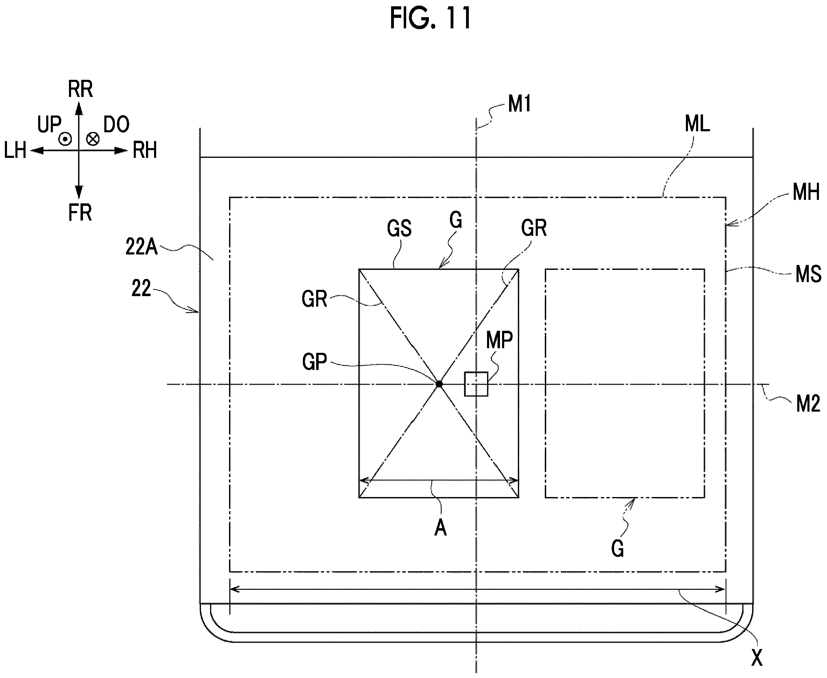

In a case where X/3 > A is satisfied, and even in a case where the center of gravity GP of the document G, which is disposed in the imaging area MH of the camera 24, is positioned within the predetermined center area MP (see Fig. 10) of the imaging area MH and even in a case where the center of gravity GP is positioned outside the center area MP (see Fig. 11), an area, where a document G that has a gap with the document G, which is disposed in the imaging area MH of the camera 24, and that has the same size as the disposed document G (the document G indicated by a two-dot chain line in Fig. 10 and Fig. 11) can be disposed, is present in the imaging area MH. The document G in which X/3 > A is satisfied includes, for example, a document G having an A5 size (148 × 210 mm), a B6 size (128 × 182 mm), a business card size (91 × 55 mm), and the like.

Further, the possible state is a state in which X/2 > A ≥ X/3 is satisfied and a center of gravity GP of the document G, which is disposed in the imaging area MH, is positioned outside the predetermined center area MP of the imaging area MH.

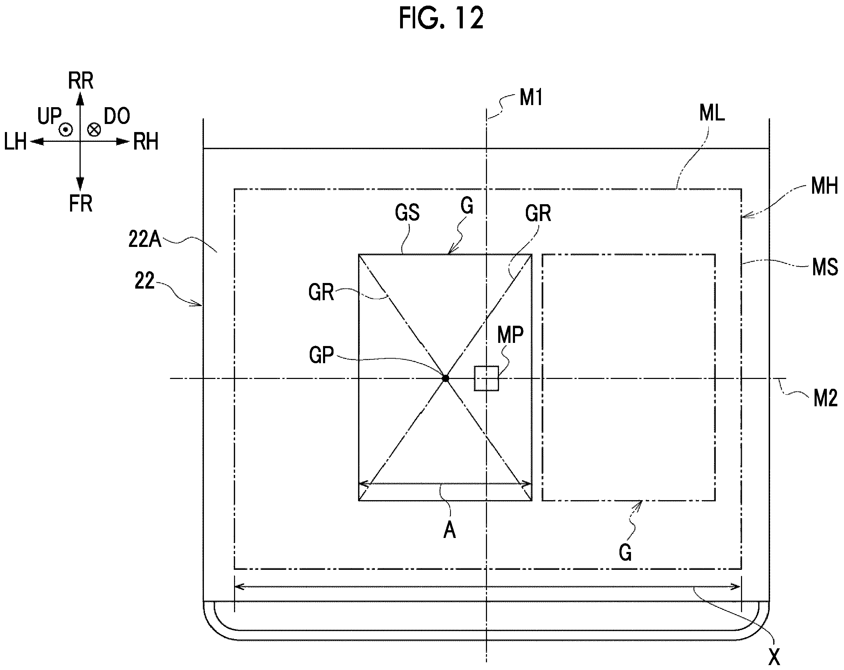

Even in a case where X/2 > A ≥ X/3 is satisfied, in a case where the center of gravity GP (of the document G, which is disposed in the imaging area MH, is positioned outside the predetermined center area MP of the imaging area MH, as illustrated in Fig. 12, an area, where a document G that has a gap with the document G, which is disposed in the imaging area MH of the camera 24, and that has the same size as the disposed document G (the document G indicated by a two-dot chain line in Fig. 12) can be disposed, is present in the imaging area MH.

As described above, the possible state is not a state in which the additional disposition of the document G in the imaging area MH is physically possible but is a state in which an estimation is made that the additional disposition of the document G in the imaging area MH occurs.

Specifically, in the present exemplary embodiment, in a case where the document G is disposed in the imaging area MH of the camera 24, the state determination portion 64 determines whether or not A ≥ X/2 is satisfied, and in a case where A ≥ X/2 is satisfied, the state determination portion 64 determines that the state is in the impossible state.

Furthermore, in a case where A ≥ X/2 is not satisfied, the state determination portion 64 determines whether or not a condition, in which X/2 > A ≥ X/3 is satisfied and the center of gravity GP of the document G that is disposed in the imaging area MH is positioned within the predetermined center area MP of the imaging area MH, is satisfied, and in a case where the condition is satisfied, the state determination portion 64 determines that the state is in the impossible state.

On the other hand, in a case where the condition is not satisfied, the state determination portion 64 determines that the state is in the possible state. Examples of the case where the condition is not satisfied include a case where X/3 > A is satisfied, and a case where X/2 > A ≥ X/3 is satisfied and the center of gravity GP of the document G that is disposed in the imaging area MH is positioned outside the predetermined center area MP of the imaging area MH.

The state determination portion 64 makes a determination by using length information of the short side GS of the document G specified by the size specification portion 63. Further, the length information of the long side ML of the imaging area MH is stored in a storage 54 in advance, and the state determination portion 64 refers to the information.

In a case where the document G is disposed in the imaging area MH of the camera 24 and the state is in the possible state (specifically, in a case where the state determination portion 64 determines that the state is in the possible state), the control portion 65 performs a first control of capturing an image of the document G on the camera 24 after the elapse of predetermined first postponement time.

In a case where the document G is disposed in the imaging area MH of the camera 24 and the state is in the impossible state (specifically, in a case where the state determination portion 64 determines that the state is in the impossible state), the control portion 65 performs a second control of capturing an image of the document G on the camera 24 after the elapse of predetermined second postponement time, which is shorter than the first postponement time. Specifically, imaging capturing in the first control and the second control is a static image capturing.

The measurement portion 66 measures the first postponement time described above and the second postponement time described above that is shorter than the first postponement time. The first postponement time consists of third postponement time and final postponement time measured after the lapse of the third postponement time.

The second postponement time consists of fourth postponement time that is shorter than the third postponement time and final postponement time measured after the lapse of the fourth postponement time. The second postponement time may be postponement time consisting of only the final postponement time.

In the present exemplary embodiment, in a case where the state determination portion 64 determines that the state is in the possible state, the measurement portion 66 measures the third postponement time as the first postponement time and measures the final postponement time after the third postponement time is measured.

Further, in a case where the state determination portion 64 determines that the state is in the possible state, the measurement portion 66 measures the fourth postponement time, that is shorter than the third postponement time, as the second postponement time and measures the final postponement time after the fourth postponement time is measured.

The first postponement time is, for example, set to 7 seconds. The third postponement time is, for example, set to 4 seconds. The final postponement time is, for example, set to 3 seconds. The second postponement time is, for example, set to 4 seconds. The fourth postponement time is, for example, set to 1 second.

The notification control portion 67 performs a control of notifying the user of a measurement status of the final postponement time on the display portion 18. As described above, in a case where the final postponement time is set to 3 seconds, the notification control portion 67 performs a control of displaying the number of seconds to be counted down, such as 3 seconds, 2 seconds, 1 second, on the display portion 18, as an example, as illustrated in Figs. 13 to 15. In Figs. 13 to 15, a countdown display indicating the number of seconds to be counted down is indicated by the reference numeral 18A on the display portion 18. Further, the document G, which is displayed on the display portion 18, is indicated by the reference numeral 18G.

The determination portion 68 determines whether or not the movement of the document G (hereinafter, referred to as a document movement), which is disposed in the imaging area MH, or the additional disposition of the document G (hereinafter, referred to as a document addition) to the imaging area MH is performed before the elapse of the fourth postponement time. Since the movement of the document G, which is disposed in the imaging area MH, is also performed in a case where the document G, which is disposed in the imaging area MH, is replaced, the replacement of the document G is also included in the document movement.

Further, the determination portion 68 determines whether or not the document movement or the document addition is performed after the elapse of the fourth postponement time and before the elapse of the final postponement time.

The determination in the determination portion 68 is performed, for example, based on the motion image information acquired by the acquisition portion 61. Specifically, as an example, the determination portion 68 determines that the document movement is performed, in a case where the coordinate positions of the four vertices of the rectangular-shaped document G are moved. Further, as an example, the determination portion 68 determines that the document addition is performed in a case where four vertices indicating the rectangular-shaped document G are newly extracted from the motion image information.

The measurement portion 66 remeasures the fourth postponement time in a case where the movement of the document G, which is disposed in the imaging area MH, or the additional disposition of the document G to the imaging area MH is performed (specifically, in a case where the determination portion 68 determines that the document movement or document addition is performed) before the elapse of the fourth postponement time.

The control portion 65 performs the second control of capturing an image of the document G after the lapse of the fourth postponement time and the final postponement time.

The measurement portion 66 remeasures the fourth postponement time and the final postponement time in a case where the movement of the document G, which is disposed in the imaging area MH, or the additional disposition of the document G to the imaging area MH is performed (specifically, in a case where the determination portion 68 determines that the document movement or document addition is performed) after the elapse of the fourth postponement time and before the elapse of the final postponement time.

The control portion 65 performs the second control of capturing an image of the document G after the lapse of the fourth postponement time and the final postponement time.

The determination portion 68 determines whether or not the movement of the document G, which is disposed in the imaging area MH, or the additional disposition of the document G to the imaging area MH is performed before the elapse of the third postponement time.

Further, the determination portion 68 determines whether or not the movement of the document G, which is disposed in the imaging area MH, or the additional disposition of the document G to the imaging area MH is performed after the elapse of the third postponement time and before the elapse of the final postponement time.

The measurement portion 66 remeasures the third postponement time in a case where the movement of the document G, which is disposed in the imaging area MH, or the additional disposition of the document G to the imaging area MH is performed (specifically, in a case where the determination portion 68 determines that the document movement or document addition is performed) before the elapse of the third postponement time.

The control portion 65 performs the first control of capturing an image of the document G after the lapse of the third postponement time and the final postponement time.

The measurement portion 66 measures the third postponement time and the final postponement time in a case where the movement of the document G, which is disposed in the imaging area MH, or the additional disposition of the document G to the imaging area MH is performed (specifically, in a case where the determination portion 68 determines that the document movement or document addition is performed) after the elapse of the third postponement time and before the elapse of the final postponement time.

The control portion 65 performs the first control of capturing an image of the document G after the lapse of the third postponement time and the final postponement time.

### <Control Processing According to Present Exemplary Embodiment>

Next, an example of control processing according to the present exemplary embodiment will be described.

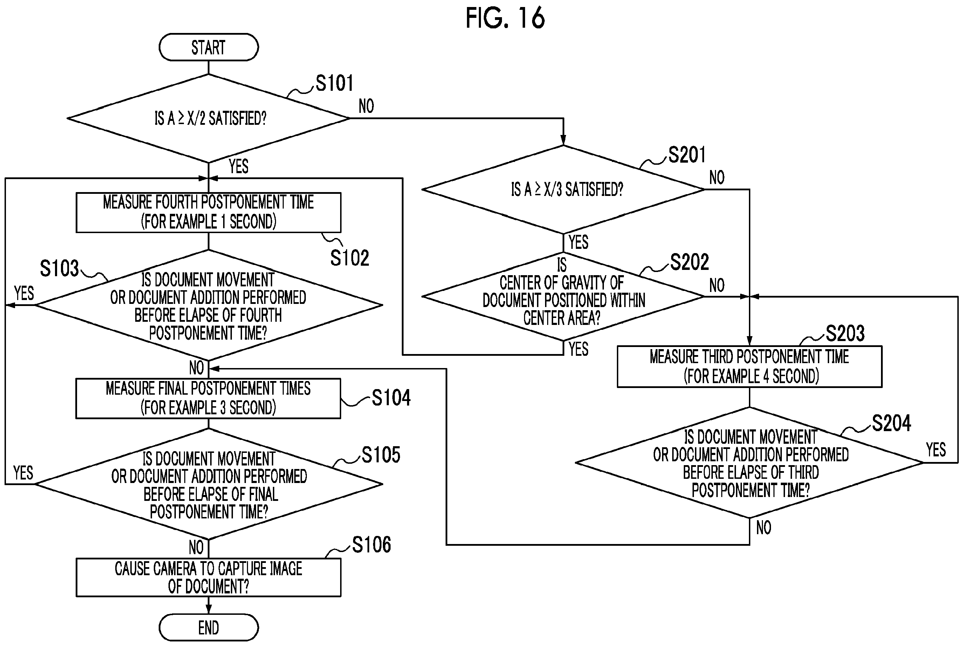

Fig. 16 is a flowchart illustrating an example of a flow of control processing executed by the control device 50.

In the present exemplary embodiment, the present control processing is executed by the CPU 51 reading a control program from the ROM 52 or the storage 54 and executing the control program. Execution of the present control processing is started, for example, in a case where the document G is disposed in the imaging area MH of the camera 24 (specifically, in a case where the detection portion 62 detects that the document G is disposed in the imaging area MH).

As illustrated in Fig. 16, the CPU 51 determines whether or not A ≥ X/2 is satisfied in a case where the present control processing is started (step S101). As described above, A (see Fig. 6) is the length of the short side GS of the document G, which is disposed in the imaging area MH, and X (see Fig. 6) is the length of the long side ML of the imaging area MH.

In a case where the CPU 51 determines that A ≥ X/2 is satisfied (step S101: YES), the CPU 51 measures the fourth postponement time (for example, 1 second) (step S102).

Next, the CPU 51 determines whether or not the document movement or the document addition is performed before the elapse of the fourth postponement time (step S103).

In a case where the CPU 51 determines that the document movement or the document addition is performed before the elapse of the fourth postponement time (step S103: YES), the CPU 51 returns to step S102 and remeasures the fourth postponement time (for example, 1 second).

In a case where the CPU 51 determines that the document movement or the document addition is performed before the elapse of the fourth postponement time (step S103: NO), the CPU 51 measures the final postponement time (for example, 3 seconds) (step S104). At this time, the CPU 51 performs a control of notifying the user of a measurement status of the final postponement time on the display portion 18. Specifically, the CPU 51 performs a control of displaying the number of seconds to be counted down, such as 3 seconds, 2 seconds, and 1 second on the display portion 18 (see Figs. 13 to 15).

Next, the CPU 51 determines whether or not the document movement or the document addition is performed before the elapse of the final postponement time (step S105).

In a case where the CPU 51 determines that the document movement or the document addition is performed before the elapse of the final postponement time (step S105: YES), the CPU 51 returns to step S102 and remeasures the fourth postponement time (for example, 1 second).

In a case where the CPU 51 determines that the document movement or the document addition is not performed before the elapse of the final postponement time (step S105: NO), the CPU 51 performs a control of capturing an image of the document G by using the static image capturing on the camera 24 (step S106), and the present control processing is ended.

In a case where the CPU 51 determines that A ≥ X/2 is not satisfied (step S101: NO) in step S101, the CPU 51 determines whether or not A ≥ X/3 is satisfied (step S201).

In a case where the CPU 51 determines that A ≥ X/3 is satisfied (step S201: YES), the CPU 51 determines whether or not the center of gravity GP of the document G, which is disposed in the imaging area MH, is positioned within the predetermined center area MP of the imaging area MH (step S202).

In a case where the CPU 51 determines that the center of gravity GP of the document G, which is disposed in the imaging area MH, is positioned within the predetermined center area MP of the imaging area MH (step S202: YES), the CPU 51 proceeds to step S102.

In a case where the CPU 51 determines that A ≥ X/3 is not satisfied (step S201: NO) in step S201, and in a case where the CPU 51 determined that the center of gravity GP of the document G, which is disposed in the imaging area MH, is positioned outside the predetermined center area MP of the imaging area MH (step S202: NO) in step S202, the CPU 51 measures the third postponement time (for example, 4 seconds) (step S203).

Next, the CPU 51 determines whether or not the document movement or the document addition is performed before the elapse of the third postponement time (step S204).

In a case where the CPU 51 determines that the document movement or the document addition is performed before the elapse of the third postponement time (step S204: YES), the CPU 51 returns to step S202 and remeasures the third postponement time (for example, 4 second).

In a case where the CPU 51 determines that the document movement or the document addition is not performed before the elapse of the third postponement time (step S204: NO), the CPU 51 proceeds to step S104.

### <Operations According to Present Exemplary Embodiment>

Next, operations according to the present exemplary embodiment will be described.

According to the present exemplary embodiment, in a case where the document G is disposed in the imaging area MH of the camera 24, and in a case where the state is in the possible state in which the additional disposition of the document G in the imaging area MH of the camera 24 is possible, the CPU 51 performs a first control of capturing an image of the document G on the camera 24 after the elapse of predetermined first postponement time.

In a case where the document G is disposed in the imaging area MH of the camera 24, and in a case where the state is in the impossible state in which the additional disposition of the document G in the imaging area MH of the camera 24 is not possible, the CPU 51 performs a second control of capturing an image of the document G on the camera 24 after the elapse of the second postponement time, which is shorter than the first postponement time.

As described above, in the present exemplary embodiment, in a case where the state is in the impossible state, since the CPU 51 causes the camera 24 to capture an image of the document G after the elapse of the second postponement time, which is shorter than the first postponement time, as compared with the case where postponement time is constantly fixed time, waiting time until the camera 24 captures the image of the document G is shortened. The reduction of waiting time is a concept including a case where the waiting time is eliminated.

As a result, in the present exemplary embodiment, the waiting time until the image, which is read by the image reading device 20, is formed on the recording medium P is shortened as compared with the case where the postponement time is constantly fixed time.

Specifically, in the present exemplary embodiment, the impossible state is a state in which in a case where the document G is disposed in the imaging area MH of the camera 24, an area, where a document G that has a gap with the document G and that has the same size as the disposed document G can be disposed, is not present in the imaging area MH.

That is, in the present exemplary embodiment, in a case where the document G is disposed in the imaging area MH of the camera 24, and in a case where an area, where a document G that has a gap with the document G and that has the same size as the disposed document G can be disposed, is not present in the imaging area MH, the CPU 51 performs the second control of capturing an image of the document G on the camera 24 after the elapse of the second postponement time, which is shorter than the first postponement time.

Therefore, the waiting time until the camera 24 captures an image of the document G is shortened as compared with the case where the impossible state is a state in which in a case where the document G is disposed in the imaging area MH of the camera 24, an area, where all the documents G that have a gap with the document G and that are smaller than the disposed document G can be disposed, is not present in the imaging area MH.

Further the present exemplary embodiment, the impossible state is a state in which A ≥ X/2 is satisfied in a case where the length of the short side GS of the document G, which is disposed in the imaging area MH, is denoted by A (see Fig. 6) and the length of the long side ML of the imaging area MH is denoted by X (see Fig. 6).

That is, in the present exemplary embodiment, in a case where the document G is disposed in the imaging area MH of the camera 24, and in a case where A ≥ X/2 is satisfied, the CPU 51 performs the second control of capturing an image of the document G on the camera 24 after the elapse of the second postponement time, which is shorter than the first postponement time.

Therefore, the waiting time until the camera 24 captures an image of the document G is shortened as compared with a case where the impossible state is a state in which the imaging area MH of the camera 24 and the document G have the same size.

Further, in the present exemplary embodiment, the impossible state is a state in which X/2 > A ≥ X/3 is satisfied and a center of gravity GP of the document G, which is disposed in the imaging area MH, is positioned within the predetermined center area MP of the imaging area MH.

That is, in the present exemplary embodiment, in a case where the document G is disposed in the imaging area MH of the camera 24, and in a case where X/2 > A ≥ X/3 is satisfied and the center of gravity GP of the document G that is disposed in the imaging area MH of the camera 24 is positioned within the predetermined center area MP of the imaging area MH, the CPU 51 performs the second control of capturing an image of the document G on the camera 24 after the elapse of the second postponement time that is shorter than the first postponement time.

Therefore, the waiting time until the camera 24 captures an image of the document G is shortened as compared with a case where the impossible state is a state in which the imaging area MH of the camera 24 and the document G have the same size.

Specifically, in the present exemplary embodiment, the possible state is a state in which in a case where the document G is disposed in the imaging area MH of the camera 24, an area, where a document G that has a gap with the document G and that has the same size as the disposed document G can be disposed, is present in the imaging area MH.

That is, in the present exemplary embodiment, in a case where the document G is disposed in the imaging area MH of the camera 24, and in a case where an area, where a document G that has a gap with the document G and that has the same size as the disposed document G can be disposed, is present in the imaging area MH, the CPU 51 performs the first control of capturing an image of the document G on the camera 24 after the elapse of the predetermined first postponement time.

Therefore, the waiting time until the camera 24 captures an image of the document G is shortened as compared with the case where the possible state is a state in which in a case where the document G is disposed in the imaging area MH of the camera 24, an area, where all the documents G that have a gap with the document G and that are smaller than the disposed document G can be disposed, is present in the imaging area MH.

More specifically, in the present exemplary embodiment, the possible state is a state in which X/3 > A is satisfied.

That is, in the present exemplary embodiment, in a case where the document G is disposed in the imaging area MH of the camera 24, and in a case where X/3 > A is satisfied, the CPU 51 performs the first control of capturing an image of the document G on the camera 24 after the elapse of the predetermined first postponement time.

Therefore, the waiting time until the camera 24 captures an image of the document G is shortened as compared with a case where the possible state is a state in which X/2 > A is satisfied.

Further, in the present exemplary embodiment, the possible state is a state in which X/2 > A ≥ X/3 is satisfied and a center of gravity GP of the document G, which is disposed in the imaging area MH, is positioned outside the predetermined center area MP of the imaging area MH.

That is, in the present exemplary embodiment, in a case where the document G is disposed in the imaging area MH, and in a case where X/2 > A ≥ X/3 is satisfied and the center of gravity GP of the document G that is disposed in the imaging area MH of the camera 24 is positioned outside the predetermined center area MP of the imaging area MH, the CPU 51 performs the first control of capturing an image of the document G on the camera 24 after the elapse of the predetermined first postponement time.

Therefore, the waiting time until the camera 24 captures an image of the document G is shortened as compared with a case where the possible state is denoted by A case in which X/2 > A ≥ X/3 is satisfied regardless of the position of the center of gravity of the document G disposed in the imaging area MH.

In the present exemplary embodiment, the first postponement time consists of the third postponement time and the final postponement time measured after the elapse of the third postponement time, and the second postponement time consists of the fourth postponement time, which is shorter than the third postponement time, and the final postponement time measured after the elapse of the fourth postponement time.

That is, in the present exemplary embodiment, in a case where the document G is disposed in the imaging area MH of the camera 24, and in a case where the state is in the possible state, the CPU 51 performs the first control of capturing an image of the document G on the camera 24 after the elapse of the third postponement time and the final postponement time, which is measured after the elapse of the third postponement time.

Further, in a case where the document G is disposed in the imaging area MH of the camera 24, and in a case where the state is in the impossible state, the CPU 51 performs the second control of capturing an image of the document G on the camera 24 after the elapse of the fourth postponement time, which is shorter than the third postponement time, and the final postponement time, which is measured after the elapse of the fourth postponement time.

As described above, even in a case where the state is in the impossible state, the final postponement time is secured, thereby as compared with the case where the second postponement time is configured with only the fourth postponement time, which is shorter than the third postponement time, a situation is suppressed in which capturing is performed while the position of the document G is being adjusted by moving the document G, which is disposed in the imaging area MH, in the impossible state.

Further, in the present exemplary embodiment, the CPU 51 performs a control of notifying the user of a measurement status of the final postponement time on the display portion 18.

Therefore, the user can easily recognize the measurement status of the final postponement time, as compared with the case where the measurement status of the final postponement time is not notified.

Further, in the present exemplary embodiment, the CPU 51 remeasures the fourth postponement time in a case where the movement of the document G, which is disposed in the imaging area MH, or the additional disposition of the document G to the imaging area MH is performed before the elapse of the fourth postponement time, and in the second control, CPU 51 causes the camera 24 to capture an image of the document G after the elapse of the fourth postponement time and the final postponement time.

Therefore, as compared with the case where the CPU 51 constantly measures the fourth postponement time only once, a situation is suppressed in which capturing is performed while the movement of the document G, which is disposed in the imaging area MH of the camera 24, or additional disposition of the document G to the imaging area MH of the camera 24 is being performed.

Further, in the present exemplary embodiment, the CPU 51 remeasures the fourth postponement time and the final postponement time in a case where the movement of the document G, which is disposed in the imaging area MH, or the additional disposition of the document G to the imaging area MH is performed after the elapse of the fourth postponement time and before the elapse of the final postponement time, and in the second control, CPU 51 causes the camera 24 to capture an image of the document G after the elapse of the fourth postponement time and the final postponement time.

Therefore, as compared with the case where the CPU 51 constantly measures the fourth postponement time and the final postponement time only once, a situation is suppressed in which capturing is performed while the movement of the document G, which is disposed in the imaging area MH of the camera 24, or the additional disposition of the document G to the imaging area MH of the camera 24 is being performed.

Further, in the present exemplary embodiment, the CPU 51 remeasures the third postponement time in a case where the movement of the document G, which is disposed in the imaging area MH, the additional disposition of the document G to the imaging area MH is performed before the elapse of the third postponement time. In the first control, an image of the document G is captured after the lapse of the third postponement time and the final postponement time.

Therefore, as compared with the case where the CPU 51 constantly measures the third postponement time only once, a situation is suppressed in which capturing is performed while the movement of the document G, which is disposed in the imaging area MH of the camera 24, or the additional disposition of the document G to the imaging area MH of the camera 24 is being performed.

Further, in the present exemplary embodiment, the CPU 51 measures the third postponement time and the final postponement time in a case where the movement of the document G, which is disposed in the imaging area MH, or the additional disposition of the document G to the imaging area MH is performed after the elapse of the third postponement time and before the elapse of the final postponement time, and in the first control CPU 51 causes the camera 24 to capture an image of the document G after the elapse of the third postponement time and the final postponement time.

Therefore, as compared with the case where the CPU 51 remeasures the third postponement time and the final postponement time in a case where the movement of the document G, which is disposed in the imaging area MH of the camera 24, or the additional disposition of the document G to the imaging area MH of the camera 24 is performed after the elapse of the third postponement time and before the elapse of the final postponement time, the waiting time until the camera 24 captures an image of the document G is shortened.

### <Modification Example>

In the present exemplary embodiment, the image reading device 20 as an example of the image capturing device has been applied to the image forming apparatus 10, but the present exemplary embodiment is not limited thereto. As an example, the image capturing device may be applied to an apparatus (for example, a medical apparatus) other than the image forming apparatus 10 and may be applied to various apparatuses. Further, as an example of the image capturing device, the configuration is not limited to that applied to a part of a specific apparatus, and the image capturing device may be used alone.

In the present exemplary embodiment, the document G is assumed to have a rectangular shape, but the document G may be configured in the same manner even in a case where the document G includes a square shape. In this case, the size specification portion 63 specifies either the obtained front-rear direction length or the right-left direction length as the length of the short side GS (see Fig. 3) of the document G.

Specifically, in the present exemplary embodiment, the impossible state is a state in which in a case where the document G is disposed in the imaging area MH of the camera 24, an area, where a document G that has a gap with the document G and that has the same size as the disposed document G can be disposed, is not present in the imaging area MH, but the present exemplary embodiment is not limited thereto.

For example, the impossible state may be a state in which in a case where the document G is disposed in the imaging area MH of the camera 24, an area, where a document G that has a gap with the document G and that has the smaller size than the disposed document G can be disposed, is not present in the imaging area MH.

Further the present exemplary embodiment, the impossible state is a state in which A ≥ X/2 is satisfied in a case where the length of the short side GS of the document G, which is disposed in the imaging area MH, is denoted by A (see Fig. 6) and the length of the long side ML of the imaging area MH is denoted by X (see Fig. 6), but the present exemplary embodiment is not limited thereto.

For example, the impossible state may be a state in which the imaging area MH of the camera 24 and the document G have the same size. Further, the impossible state may be a state in which A > X/2 is satisfied and can set various states to the impossible state.

Further, the present exemplary embodiment, the impossible state is a state in which X/2 > A ≥ X/3 is satisfied and a center of gravity GP of the document G, which is disposed in the imaging area MH, is positioned within the predetermined center area MP of the imaging area MH, but the present exemplary embodiment is not limited thereto.

For example, the impossible state may be a state in which X/2 > A > X/3 is satisfied and a center of gravity GP of the document G, which is disposed in the imaging area MH, is positioned within the predetermined center area MP of the imaging area MH.

Specifically, in the present exemplary embodiment, the possible state is a state in which in a case where the document G is disposed in the imaging area MH of the camera 24, an area, where a document G that has a gap with the document G and that has the same size as the disposed document G can be disposed, is present in the imaging area MH, but the present exemplary embodiment is not limited thereto.

For example, the possible state may be a state in which in a case where the document G is disposed in the imaging area MH of the camera 24, an area, where a document G that has a gap with the document G and that has the smaller size than the disposed document G can be disposed, is present in the imaging area MH.

More specifically, in the present exemplary embodiment, the possible state is a state in which X/3 > A is satisfied, but the present exemplary embodiment is not limited thereto. Further, for example, the possible state may be a state in which X/2 > A is satisfied and can set various states to the possible state.

Further, in the present exemplary embodiment, the possible state is a state in which X/2 > A ≥ X/3 is satisfied and a center of gravity GP of the document G, which is disposed in the imaging area MH, is positioned outside the predetermined center area MP of the imaging area MH, but the present exemplary embodiment is not limited thereto.

For example, the possible state may be set in a case where X/2 > A ≥ X/3 is satisfied regardless of the position of the center of gravity of the document G disposed in the imaging area MH.

Further, in the present exemplary embodiment, the first postponement time consists of the third postponement time and the final postponement time measured after the elapse of the third postponement time, and the second postponement time consists of the fourth postponement time, which is shorter than the third postponement time, and the final postponement time measured after the elapse of the fourth postponement time, but the present exemplary embodiment is not limited thereto.

For example, the second postponement time may be configured with only the fourth postponement time shorter than the third postponement time, and the second postponement time may be configured with various times.

Further, in the present exemplary embodiment, the CPU 51 performs a control of notifying the user of a measurement status of the final postponement time on the display portion 18, but the present exemplary embodiment is not limited thereto. For example, a configuration may be used in which the measurement status of the final postponement time is not notified. Further, the notification may be a notification by voice instead of or in addition to the notification by the display of the display portion 18.

Further, in the present exemplary embodiment, the CPU 51 remeasures the fourth postponement time in a case where the movement of the document G, which is disposed in the imaging area MH, or the additional disposition of the document G to the imaging area MH is performed before the elapse of the fourth postponement time, and in the second control, CPU 51 causes the camera 24 to capture an image of the document G after the elapse of the fourth postponement time and the final postponement time, but the present exemplary embodiment is not limited thereto. For example, a configuration may be used in which the CPU 51 constantly measures the fourth postponement time only once.

Further, in the present exemplary embodiment, the CPU 51 remeasures the fourth postponement time and the final postponement time in a case where the movement of the document G, which is disposed in the imaging area MH, or the additional disposition of the document G to the imaging area MH is performed after the elapse of the fourth postponement time and before the elapse of the final postponement time, and in the second control, CPU 51 causes the camera 24 to capture an image of the document G after the elapse of the fourth postponement time and the final postponement time, but the present exemplary embodiment is not limited thereto. For example, a configuration may be used in which the CPU 51 constantly measures the fourth postponement time and the final postponement time only once.

Further, in the present exemplary embodiment, the CPU 51 remeasures the third postponement time in a case where the movement of the document G, which is disposed in the imaging area MH, the additional disposition of the document G to the imaging area MH is performed before the elapse of the third postponement time. In the first control, an image of the document G is captured after the lapse of the third postponement time and the final postponement time, but the present exemplary embodiment is not limited thereto. For example, a configuration may be used in which the CPU 51 constantly measures the third postponement time only once.

Further, in the present exemplary embodiment, the CPU 51 measures the third postponement time and the final postponement time in a case where the movement of the document G, which is disposed in the imaging area MH, or the additional disposition of the document G to the imaging area MH is performed after the elapse of the third postponement time and before the elapse of the final postponement time, and in the first control CPU 51 causes the camera 24 to capture an image of the document G after the elapse of the third postponement time and the final postponement time, but the present exemplary embodiment is not limited thereto. For example, a configuration may be used in which the CPU 51 remeasures the third postponement time and the final postponement time in a case where the movement of the document G, which is disposed in the imaging area MH of the camera 24, or the additional disposition of the document G to the imaging area MH of the camera 24 is performed after the elapse of the third postponement time and before the elapse of the final postponement time.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The exemplary embodiment of the present invention is not limited to the above-described exemplary embodiment, and various modifications, changes, and improvements can be made within a range that does not deviate from the gist thereof. For example, a plurality of the modification examples illustrated above may be combined and configured as appropriate.
(((1))) A control device comprising:
   a processor configured to:
   perform, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and
   perform, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.
(((2))) The control device according to (((1))),
   wherein the impossible state is a state in which in a case where the document is disposed in the imaging area, an area, where a document that has a gap with the document and that has the same size as the disposed document is capable of being disposed, is not present in the imaging area.
(((3))) The control device according to (((2))),
   wherein the impossible state is a state in which
   in a case where the document that is disposed in the imaging area and the imaging area each have a rectangular shape, and a length of a short side of the document is denoted by A and a length of a long side of the imaging area is denoted by X,
   A≥ X/2 is satisfied.
(((4))) The control device according to (((2))),
   wherein the impossible state is a state in which
   in a case where the document that is disposed in the imaging area and the imaging area each have a rectangular shape, and a length of a short side of the document is denoted by A and a length of a long side of the imaging area is denoted by X,
   X/2 > A ≥ X/3 is satisfied, and a center of gravity of the document that is disposed in the imaging area is positioned within a predetermined center area of the imaging area.
(((5))) The control device according to any one of (((1))) to (((4))),
   wherein the possible state is a state in which in a case where the document is disposed in the imaging area, an area, where a document that has a gap with the document and that has the same size as the disposed document is capable of being disposed, is present in the imaging area.
(((6))) The control device according to (((5))),
   wherein the possible state is a state in which
   in a case where the document that is disposed in the imaging area and the imaging area each have a rectangular shape, and a length of a short side of the document is denoted by A and a length of a long side of the imaging area is denoted by X,
   X/3 > A is satisfied.
(((7))) The control device according to (((5))) or (((6))), wherein the possible state is a state in which
   in a case where the document that is disposed in the imaging area and the imaging area each have a rectangular shape, and a length of a short side of the document is denoted by A and a length of a long side of the imaging area is denoted by X,
   X/2 > A ≥ X/3 is satisfied, and a center of gravity of the document that is disposed in the imaging area is positioned outside a predetermined center area of the imaging area.
(((8))) The control device according to any one of claims (((1))) to (((7))),
   wherein the first postponement time consists of third postponement time and final postponement time, which is measured after elapse of the third postponement time, and
   the second postponement time consists of fourth postponement time, which is shorter than the third postponement time, and the final postponement time, which is measured after elapse of the fourth postponement time, or consists only of the final postponement time.
(((9))) The control device according to (((8))), wherein the processor is configured to:
   perform a control of providing a notification of a measurement status of the final postponement time, on a notification portion.
(((10))) The control device according to claim (((8))) or (((9))), wherein the processor is configured to:
   remeasure the fourth postponement time in a case where a movement of the document disposed in the imaging area or the additional disposition of a document to the imaging area is performed before the elapse of the fourth postponement time; and
   capture an image of the document after elapse of the fourth postponement time and the final postponement time, in the second control.
(((11))) The control device according to any one of claims (((8))) to (((10))), wherein the processor is configured to:
   remeasure the fourth postponement time and the final postponement time in a case where a movement of the document disposed in the imaging area or the additional disposition of a document to the imaging area is performed after the elapse of the fourth postponement time and before elapse of the final postponement time; and
   capture an image of the document after elapse of the fourth postponement time and the final postponement time, in the second control.
(((12))) The control device according to any one of (((8))) to (((11))), wherein the processor is configured to:
   remeasure the third postponement time in a case where a movement of the document disposed in the imaging area or the additional disposition of a document to the imaging area is performed before the elapse of the third postponement time; and
   capture an image of the document after elapse of the third postponement time and the final postponement time, in the first control.
(((13))) The control device according to any one of claims (((8))) to (((12))), wherein the processor is configured to:
   measure the third postponement time and the final postponement time in a case where a movement of the document disposed in the imaging area or the additional disposition of a document to the imaging area is performed after the elapse of the third postponement time and before elapse of the final postponement time; and
   capture an image of the document after elapse of the third postponement time and the final postponement time, in the first control.
(((14))) An execution program that causes a computer to execute a process comprising:
   performing, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and
   performing, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.
(((15))) An image capturing device comprising:
   an imaging portion that captures an image of a document disposed in an imaging area,
   wherein in a case where the document is disposed in the imaging area and in a case where a state is in a possible state in which an additional disposition of a document to the imaging area is possible, the imaging portion captures an image of the document after elapse of predetermined first postponement time, and
   in a case where the document is disposed in the imaging area and in a case where the state is in an impossible state in which the additional disposition of a document to the imaging area is not possible, the imaging portion captures an image of the document after elapse of second postponement time shorter than the first postponement time.
(((16))) An image forming apparatus comprising:
   the image capturing device according to (((15))); and
   an image forming portion that forms an image, which is captured by the image capturing device, on a recording medium.

According to the configuration of (((1))), the waiting time until an image of the document is captured by the imaging portion is shortened, as compared with a case where postponement time is constantly fixed time.

According to the configuration of (((2))), the waiting time until the imaging portion captures an image of the document is shortened as compared with the case where the impossible state is a state in which in a case where the document is disposed in the imaging area, an area, where all the documents that have a gap with the document and that are smaller than the disposed document can be disposed, is not present in the imaging area.

According to the configuration of (((3))), the waiting time until the imaging portion captures an image of the document is shortened as compared with a case where the impossible state is a state in which the imaging area and the document have the same size.

According to the configuration of (((4))), the waiting time until the imaging portion captures an image of the document is shortened as compared with a case where the impossible state is a state in which the imaging area and the document have the same size.

According to the configuration of (((5))), the waiting time until the imaging portion captures an image of the document is shortened as compared with the case where the possible state is a state in which in a case where the document is disposed in the imaging area, an area, where all the documents that have a gap with the document and that are smaller than the disposed document can be disposed, is present in the imaging area.

According to the configuration of (((6))), the waiting time until the imaging portion captures an image of the document is shortened as compared with a case where the possible state is a state in which X/2 > A is satisfied.

According to the configuration of (((7))), the waiting time until the imaging portion captures an image of the document is shortened as compared with a case where the possible state is denoted by A case in which X/2 > A ≥ X/3 is satisfied regardless of the position of the center of gravity of the document disposed in the imaging area.

According to the configuration of (((8))), as compared with the case where the second postponement time is configured with only the fourth postponement time, which is shorter than the third postponement time, a situation is suppressed in which capturing is performed while the position of the document G is being adjusted by moving the document, which is disposed in the imaging area MH, in the impossible state.

According to the configuration of (((9))), the user can easily recognize the measurement status of the final postponement time, as compared with the case where the measurement status of the final postponement time is not notified.

According to the configuration of (((10))), as compared with the case where the processor constantly measures the fourth postponement time only once, a situation is suppressed in which capturing is performed while the movement of the document, which is disposed in the imaging area, or additional disposition of the document to the imaging area is being performed.

According to the configuration of (((11))), as compared with the case where the processor constantly measures the fourth postponement time and the final postponement time only once, a situation is suppressed in which capturing is performed while the movement of the document, which is disposed in the imaging area, or additional disposition of the document to the imaging area is being performed.

According to the configuration of (((12))), as compared with the case where the processor constantly measures the third postponement time only once, a situation is suppressed in which capturing is performed while the movement of the document, which is disposed in the imaging area, or additional disposition of the document to the imaging area is being performed.

According to the configuration of (((13))), as compared with the case where the processor remeasures the third postponement time and the final postponement time in a case where the movement of the document, which is disposed in the imaging area, or the additional disposition of the document to the imaging area is performed after the elapse of the third postponement time and before the elapse of the final postponement time, the waiting time until the imaging portion captures an image of the document is shortened.

According to the configuration of (((14))), the waiting time until an image of the document is captured by the imaging portion is shortened, as compared with a case where postponement time is constantly fixed time.

According to the configuration of (((15))), the waiting time until an image of the document is captured by the imaging portion is shortened, as compared with a case where postponement time is constantly fixed time.

According to the configuration of (((16))), the waiting time until an image captured by the image capturing device is formed on the recording medium is shortened as compared with the case where postponement time is constantly a fixed time.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
11: image forming apparatus main body
12: medium accommodation portion
13: medium discharging portion
14: image forming portion
16: transporting mechanism
17: transporting member
18: display portion
18A: countdown display
18G: document on the display portion
20: image reading device
22: document table
22A: upper surface
24: camera
26: supporting portion
50: control device
51: CPU
52: ROM
53: RAM
54: storage
59: bus
61: acquisition portion
62: detection portion
63: size specification portion
64: state determination portion
65: control portion
66: measurement portion
67: notification control portion
68: determination portion
G: document
GP: center of gravity
GR: diagonal line
GS: short side
M1: center line
M2: central line
MH: imaging area
MI,: long side
MP: center area
MS: short side
P: recording medium

## Claims

1. A control device comprising:
a processor configured to:
perform, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and
perform, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.

2. The control device according to claim 1,
wherein the impossible state is a state in which in a case where the document is disposed in the imaging area, an area, where a document that has a gap with the document and that has the same size as the disposed document is capable of being disposed, is not present in the imaging area.

3. The control device according to claim 2,
wherein the impossible state is a state in which
in a case where the document that is disposed in the imaging area and the imaging area each have a rectangular shape, and a length of a short side of the document is denoted by A and a length of a long side of the imaging area is denoted by X,
A≥ X/2 is satisfied.

4. The control device according to claim 2,
wherein the impossible state is a state in which
in a case where the document that is disposed in the imaging area and the imaging area each have a rectangular shape, and a length of a short side of the document is denoted by A and a length of a long side of the imaging area is denoted by X,
X/2 > A ≥ X/3 is satisfied, and a center of gravity of the document that is disposed in the imaging area is positioned within a predetermined center area of the imaging area.

5. The control device according to any one of claims 1 to 4,
wherein the possible state is a state in which in a case where the document is disposed in the imaging area, an area, where a document that has a gap with the document and that has the same size as the disposed document is capable of being disposed, is present in the imaging area.

6. The control device according to claim 5,
wherein the possible state is a state in which
in a case where the document that is disposed in the imaging area and the imaging area each have a rectangular shape, and a length of a short side of the document is denoted by A and a length of a long side of the imaging area is denoted by X,
X/3 > A is satisfied.

7. The control device according to claim 5 or 6,
wherein the possible state is a state in which
in a case where the document that is disposed in the imaging area and the imaging area each have a rectangular shape, and a length of a short side of the document is denoted by A and a length of a long side of the imaging area is denoted by X,
X/2 > A ≥ X/3 is satisfied, and a center of gravity of the document that is disposed in the imaging area is positioned outside a predetermined center area of the imaging area.

8. The control device according to any one of claims 1 to 7,
wherein the first postponement time consists of third postponement time and final postponement time, which is measured after elapse of the third postponement time, and
the second postponement time consists of fourth postponement time, which is shorter than the third postponement time, and the final postponement time, which is measured after elapse of the fourth postponement time, or consists only of the final postponement time.

9. The control device according to claim 8, wherein the processor is configured to:
perform a control of providing a notification of a measurement status of the final postponement time, on a notification portion.

10. The control device according to claim 8 or 9, wherein the processor is configured to:
remeasure the fourth postponement time in a case where a movement of the document disposed in the imaging area or the additional disposition of a document to the imaging area is performed before the elapse of the fourth postponement time; and
capture an image of the document after elapse of the fourth postponement time and the final postponement time, in the second control.

11. The control device according to any one of claims 8 to 10, wherein the processor is configured to:
remeasure the fourth postponement time and the final postponement time in a case where a movement of the document disposed in the imaging area or the additional disposition of a document to the imaging area is performed after the elapse of the fourth postponement time and before elapse of the final postponement time; and
capture an image of the document after elapse of the fourth postponement time and the final postponement time, in the second control.

12. The control device according to any one of claims 8 to 11, wherein the processor is configured to:
remeasure the third postponement time in a case where a movement of the document disposed in the imaging area or the additional disposition of a document to the imaging area is performed before the elapse of the third postponement time; and
capture an image of the document after elapse of the third postponement time and the final postponement time, in the first control.

13. The control device according to any one of claims 8 to 12, wherein the processor is configured to:
measure the third postponement time and the final postponement time in a case where a movement of the document disposed in the imaging area or the additional disposition of a document to the imaging area is performed after the elapse of the third postponement time and before elapse of the final postponement time; and
capture an image of the document after elapse of the third postponement time and the final postponement time, in the first control.

14. An execution program that causes a computer to execute a process comprising:
performing, in a case where a document is disposed in an imaging area of an imaging portion and in a case where a state is in a possible state in which an additional disposition of a document to the imaging area is possible, a first control of capturing an image of the document, on the imaging portion after elapse of predetermined first postponement time; and
performing, in a case where the document is disposed in the imaging area and in a case where the state is in an impossible state in which the additional disposition of a document to the imaging area is not possible, a second control of capturing an image of the document, on the imaging portion after elapse of second postponement time shorter than the first postponement time.

15. An image capturing device comprising:
an imaging portion that captures an image of a document disposed in an imaging area,
wherein in a case where the document is disposed in the imaging area and in a case where a state is in a possible state in which an additional disposition of a document to the imaging area is possible, the imaging portion captures an image of the document after elapse of predetermined first postponement time, and
in a case where the document is disposed in the imaging area and in a case where the state is in an impossible state in which the additional disposition of a document to the imaging area is not possible, the imaging portion captures an image of the document after elapse of second postponement time shorter than the first postponement time.
